# EUROPÄISCHE PATENTSCHRIFT

(11) **EP 0 502 841 B1**
(45) Veröffentlichungstag und Bekanntmachung des Hinweises auf die Patenterteilung: **30.11.1994**
(21) Anmeldenummer: 92890036.4
(22) Anmeldetag: 12.02.1992
(51) Int. Cl.: H04R 1/02

(54) **Schalldurchlässige Abdeckung, insbesondere für Lautsprecher**
Sound permeable cover, particularly for loudspeakers
Couverture perméable du son, en particulier pour haut-parleurs

(30) Priorität: 15.02.1991 AT 325/91
(43) Veröffentlichungstag der Anmeldung: 09.09.1992
(73) Patentinhaber: Just, Günter, A-1230 Wien (AT)
(72) Erfinder: Just, Günter, A-1230 Wien (AT)
(74) Vertreter: Köhler-Pavlik, Johann, Dipl.-Ing.

(56) Entgegenhaltungen:
- EP-A- 0 422 322
- AT-B- 385 384
- DE-A- 3 431 005

## Beschreibung

Die Erfindung betrifft eine schalldurchlässige Abdeckung, insbesondere für Lautsprecher, bestehend aus Gitteröffnungen, begrenzenden Stegen aus gespritztem Kunststoffmaterial und aus einem die Gitteröffnungen abdeckenden, flächigen, schalldurchlässigen Material, beispielsweise einem Vlies, Gewebe oder Gewirke, wobei beiden Oberflächen des Materials benachbart deckungsgleiche Stege angeordnet sind und das Material der Stege das schalldurchlässige Material durchdringt und geht aus von der AT-B- 385 384.

Seit geraumer Zeit sind schalldurchlässige Abdeckungen bekannt, um insbesondere bei Lautsprechern das Eindringen von Schmutz, Fremdkörpern od.dgl. zu verhindern und somit die Lautsprechermembrane zu schützen. Bei der Lautsprecherabdeckung gemäß der US-A-3 674 108 ist eine Stoffbahn zwischen zwei die seitliche Begrenzung der Abdeckung bildende Rahmen eingespannt. Diese Abdeckung ist jedoch besonders an fällig für Beschädigungen der großflächigen und nicht speziell geschützten Stoffbahn.

Daher wurden auch Lautsprechergitter vorgeschlagen, bei welchen auf einer gitterartigen, meist aus Kunststoff angefertigten Struktur, ein schalldurchlässiges Material, beispielsweise durch Kleben befestigt ist. Hiebei besteht jedoch die Gefahr, daß sich dieses Material wieder vom Gitter löst und somit einerseits die Tonqualität durch Mitschwingen, Flattern oder ähnliche Geräusche stört, oder auch den Lautsprecher nicht mehr vor Eindringen von Verunreinigungen oder Fremdkörpern schützt.

Daher wurden weiters Lautsprecherabdeckungen vorgeschlagen, die entsprechend beispielsweise der DE-A-2 404 943 aus zwei separat hergestellten Gittern besteht, zwischen welchen eine oder mehrere Lagen aus schalldurchlässigem Material eingespannt sind. Die Gitter werden mittels mechanischer Hilfsmittel, wie beispielsweise Schrauben, miteinander verbunden. Diese Ausführungsform verlangt jedoch einen größeren Aufwand bei der Herstellung, da sie aus mehreren Einzelteilen besteht, welche anschließend zusammengebaut werden müssen, und da weiterhin die Gefahr besteht, daß sich die Verbindungsmittel infolge der auftretenden Schwingungen lockern oder sogar lösen und somit ebenfalls störende Nebengeräusche od.dgl. auftreten können, bzw. auch die Gefahr besteht, daß die gelockerten und gelösten Teile in den Lautsprecher hineinfallen.

In Anbetracht der obigen Nachteile wurde weiters eine Lautsprecherabdeckung gemäß der AT-B-385 384 entworfen, bei welcher zu beiden Seiten eines flächigen, schalldurchlässigen Materials Gitter aus Kunststoff angeordnet sind, wobei die Stege des Gitters das schalldurchlässige Material zumindest an einzelnen Stellen durchdringen, und durch Verbindung mit dem gegenüberliegenden Gitter einen einstückigen Gitterkörper bilden, in welchen das schalldurchlässige Material eingespannt ist. Jedoch bietet auch diese Konstruktion keine vollständige Sicherheit dafür, daß das schalldurchlässige Material zwischen den beiden Kunststoffgittern sicher und unbeweglich eingespannt ist. Vielmehr kann es bei Durchdringung des Materials an nur wenigen Stellen zu einem unerwünschten Lockern dieses Materials und damit ebenfalls zu akustisch störenden Nebeneffekten kommen. Überdies besteht durch die Beweglichkeit des schalldurchlässigen Materials die Gefahr, daß die Verbindungsstellen der beiden Gittern bei Dauerbeanspruchung beschädigt werden und somit die Einspannung des Materials weiter vermindert wird. Das Herstellungsverfahren gemäß der AT-B-385 384 sieht vor, die Gitter beidseits an das schalldurchlässige Material anzuspritzen. Bei dieser Vorgangsweise ist jedoch damit zu rechnen, daß sich der Kunststoff auch in die Gitteröffnungen hinein ausbreitet und somit den Schalldurchgang durch die Abdeckung beeinträchtigt. Auch entlang der Oberfläche des schalldurchlässigen Materials kann sich durch den beidseitig ausgeübten Druck Kunststoffmaterial teilweise über die Gitteröffnungen ausbreiten und sogenannte Schwimmhäute bilden, welche ebenfalls nachteilig für den Schalldurchgang ebenso wie für den optischen Eindruck sind.

Die Aufgabe der vorliegenden Erfindung war daher eine schalldurchlässige Abdeckung, welche die oben angeführten Nachteile vermeidet und eine sichere und stabile Verbindung zwischen den Gitterstrukturen und dem schalldurchlässigen Material aufweist.

Eine weitere Aufgabe war es, ein Verfahren zur Herstellung einer derartigen Abdeckung anzugeben, bei welchem das Auftreten der oben beschriebenen nachteiligen Kunststoffgebilde vermieden werden kann.

Zur Lösung der ersten Aufgabe ist erfindungsgemäß vorgesehen, daß der Kunststoff einseitig angespritzt ist und eine der Kunststoffstrukturen aus Kunststoff besteht, welcher das schalldurchlässige Material durchdrungen hat, sodaß die Kunststoffstrukturen im wesentlichen entlang der Gesamtheit aller Berührungsflächen der Gitterstege miteinander und mit dem schalldurchlässigen Material verbunden sind.

Die erfindungswesentlichen obigen Merkmale sind für den Fachmann ohne weiteres am Gegenstand selbst erkennbar, sodaß sich dieser von auf den ersten Blick gleichartigen Erzeugnissen, beispielsweise gemäß der bereits zitierten AT-B-385 384, deutlich unterscheidet.

Diese Konstruktion hat den Vorteil, den Schalldurchgang durch die Öffnungen der gitterartigen Strukturen ungehindert zuzulassen. Weder im Inneren des schalldurchlässigen Gewebes, noch an der Oberfläche desselben, bilden sich, durch aufeinander zu gerichtete Materialströme des Kunststoffes verursacht, Kunststoffstrukturen, welche sich in Richtung der Mitte der Gitteröffnungen hin erstrecken. Somit ist sichergestellt, daß der Schalldurchgang nicht behindert und die akustische Qualität nicht nachteilig beeinflußt wird.

Die erfindungsgemäße Abdeckung bietet weiters den Vorteil, daß die Gitter zu beiden Seiten des schalldurchlässigen Materials mit diesem gemeinsam einen einzigen Körper bilden, bei welchem keine Teile vorhanden sind, die sich lockern oder lose werden können. Daher ist eine Beschädigung des abgedeckten Lautsprechers oder ähnlichen Bauteiles gänzlich ausgeschlossen. Darüberhinaus ist durch die feste Verbindung aller Einzelkomponenten miteinander sichergestellt, daß keine störenden Nebengeräusche aufgrund von Relativbewegungen der Einzelkomponenten zueinander auftreten und so die akustische Qualität des Lautsprechers beeinflussen können.

Wenn die erfindungsgemäße Abdeckung derart ausgelegt ist, daß die Höhe der Gitterstege auf den beiden Seiten des schalldurchlässigen Materials unterschiedlich ist, die dickeren Gitterstege vorzugsweise auf der dem Lautsprecher od.dgl. abgewandten Seite des Materials liegen und aus Kunststoff bestehen, der das schalldurchlässige Material durchdrungen hat, ist das Gewebe oder Vlies aus schalldurchlässigem Material besonders gut gegenüber äußeren Einflüssen geschützt und überdies bietet diese Konstruktion auch Erleichterungen im Herstellungsverfahren. Hiebei hat sich im besonderen als vorteilhaft herausgestellt, daß die Mittelebene des schalldurchlässigen Materials die Gesamthöhe der Gitterstege beider Kunststoffstrukturen unter Einschluß der Fäden oder Stege im Verhältnis 2:1 teilt.

Gemäß einem zusätzlichen Merkmal ist vorteilhafterweise vorgesehen, daß der das schalldurchlässige Material durchdringende Kunststoff zwischen den Gitterstegen beider gitterartigen Strukturen im wesentlichen gerade verläuft und mit dem schalldurchlässigen Material verbundene Stege, allenfalls aus einzelnen Fäden zusammengesetzt, bildet.

Die erfindungsgemäße schalldurchlässige Abdeckung kann in einfacher Weise in einem Verfahren hergestellt werden, bei welchem vorgesehen ist, daß das schalldurchlässige Material zwischen zwei Halbformen für die gitterartigen Kunststoffstrukturen in eine Spritzgußmaschine eingelegt, die Maschine geschlossen, anschließend Kunststoff von lediglich einer Seite des schalldurchlässigen Materials aus eingespritzt und zum Durchdringen des schalldurchlässigen Materials im wesentlichen entlang des gesamten Verlaufes der Stege gebracht wird, und die Zufuhr von weiterem Kunststoff gestoppt wird, wenn der Kunststoff das schalldurchlässige Material durchdrungen und auch die der Einspritzseite gegenüberliegende Form ausgefüllt hat.

Auf diese Weise ist sichergestellt, daß der Kunststoff das schalldurchlässige Material in im wesentlichen geraden Linien durchdringt und es nicht zu einer Ausbildung von im Vlies oder an dessen Oberfläche sich zur Mitte der Gitteröffnung hin erstreckenden Kunststoffstrukturen kommt.

Eine besonders exakte Herstellung der erfindungsgemäßen Abdeckungen und eine Verminderung der Ausschußproduktion wird dadurch erzielt, daß das schalldurchlässige Material während des Schließvorganges der Spritzgußmaschine durch Erzeugung eines Vakuums an einigen Punkten einer der Halbformen fixiert wird.

Bei unterschiedlich tiefen Halbformen wird der Kunststoff vorteilhafter weise von der Seite der inniger tiefen Halbform her eingespritzt, um mit Sicherheit ein Ausschwemmen des schalldurchlässigen Materials an der Oberfläche der Kunststoffstrukturen zu vermeiden.

In der nachfolgenden Beschreibung wird unter Bezugnahme auf die beigefügten Zeichnungen ein Ausführungsbeispiel der Erfindung näher erläutert. Dabei zeigen die
- Fig. 1: eine Draufsicht auf die erfindungsgemäße Abdeckung,
- Fig. 2: einen Querschnitt durch die erfindungsgemäße Abdeckung entlang der Linie II-II in Fig. 1 und
- Fig. 3: einen vergrößerten Ausschnitt A im Bereich der Durchdringungsstelle des schalldurchlässigen Materials aus Fig.2.

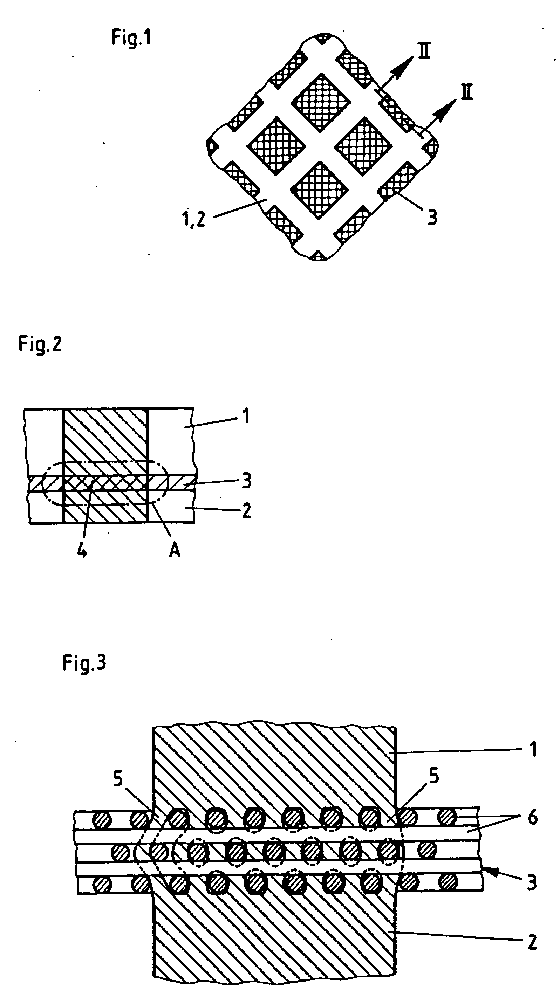

In den Figuren sind die Gitterstege der beiden gitterartigen Kunststoffstrukturen mit 1 und 2 bezeichnet. Zwischen diesen beiden Kunststoffstrukturen 1,2 ist ein flächiges Vlies, Gewebe oder Gewirke aus schalldurchlässigem Material 3 eingespannt. Die beiden Strukturen, d.h. deren Gitterstege 1,2 sind zueinander deckungsgleich, und das Kunststoffmaterial durchdringt im wesentlichen entlang der gesamten Berührungsflächen das schalldurchlässige Material 3 und bildet so einen einstückigen Körper, der aus den Gitterstegen 1 und 2 zu beiden Seiten, sowie dem schalldurchlässigen Material 3 besteht. Die Bereiche der Durchdringung des Materials 3 vom Kunststoff sind mit 4 bezeichnet (Fig.2).

Die geometrische Form der Gitteröffnungen, sowie die Querschnittsform der Gitterstege 1 und 2 der beiden Kunststoffstrukturen ist im wesentlichen beliebig und kann den Wünschen des Gestalters entsprechend ausgebildet sein. Beispielsweise sind quadratische (Fig.1) allgemein polygonal ausgebildete, aber auch runde Gitteröffnungen möglich und die Querschnittsform der Gitterstege 1,2 selbst kann ebenfalls polygonal oder auch abgerundet sein.

In Fig. 3 ist nun in vergrößertem Maßstab der Bereich A der Fig. 2 dargestellt. Sie zeigt deutlicher, wie die Verbindung der Gitterstege 1,2 bei den Strukturen durch das schalldurchlässige Material 3 hindurch zustandekommt. Dabei durchdringen Fäden 5, welche allenfalls aneinanderliegend Stege 4 bilden können, aus demselben Kunststoffmaterial wie die Gitterstege 1 bzw. 2 die Zwischenräume der Fasern 6 des schalldurchlässigen Materials 3. Somit bildet sich eine Verbindung der beiden gitterartigen Kunststoffstrukturen miteinander, in welchen das schalldurchlässige Vlies, Gewebe oder Gewirke 3 im wesentlichen entlang der gesamten Berührungsflächen der Gitterstege 1,2 fest eingeschmolzen und damit sicher zwischen den beiden Strukturen gehalten ist. Der das Material 3 durchdringende Kunststoff bildet zwischen den Gitterstegen 1,2 beider Strukturen im wesentlichen gerade Fäden 5 oder Stege 4, welche allenfalls aus einzelnen Fäden 5 zusammengesetzt sind, wobei bei sehr festem Gewebe die Fäden 5 um die Fasern 6 des Materials 3 herum abgelenkt werden und daher etwas von der kürzestmöglichen geraden Verbindung der beiden Strukturen abweichen. Wem allerdings ein lockeres Gewebe vorliegt, können dessen Fasern 6 durch das durchdringede Kunststoffmaterial, d.h. die Fäden 5 beiseite gedrängt werden, sodaß in diesem Fall die Verbindung der Gitterstege 1,2 durch gerade Kunststoffelemente gebildet ist.

Besonders sicher gegenüber Lockern oder Ausreißen des schalldurchlässigen Materials 3 ist eine Konstruktion der erfindungsgemäßen Abdeckung, bei welcher die beiden Kunststoffstrukturen im wesentlichen entlang der Gesamtheit aller Berührungsflächen der Gitterstege 1,2 miteinander und mit dem schalldurchlässigen Material 3 verbunden sind, wozu der Kunststoff einseitig angespritzt ist und die Fäden 5 oder Stege 4 die Gitterstege 1,2 verbinden und wobei eine der Kunststoffstrukturen aus Kunststoff besteht, welche das schalldurchlässige Material 3 durchdrungen hat. Bei Verformungen oder Belastungen durch äußere Einflüsse werden die Kräfte auf eine große Fläche verteilt, sodaß einzelne zum Lockern oder Ausreißen führende Kraftspitzen an bestimmten Punkten vermieden werden können.

Einen besonders wirksamen Schutz gegenüber äußeren Beeinflussungen, wie dies beispielsweise für Lautsprecherabdeckungen durch Anschlagen oder Aufliegen von Gegenständen entstehen können, man denke hiebei nur an die horizontal eingebauten Lautsprecherabdeckungen im Fahrzeugbau, kann durch das Merkmal erzielt werden, gemäß welchem die Höhe der Gitterstege 1,2 auf den beiden Seiten des schalldurchlässigen Materials 3 unterschiedlich ist, und die dickeren Gitterstege 1 vorzugsweise auf der den Lautsprecher od.dgl. abgewandten Seite des Materials 3 liegen. Das schalldurchlässige Material ist auf diese Weise durch eine relativ dicke Kunststoffschicht geschützt, welche die Belastungen abfängt.

Wie in Fig. 2 dargestellt ist, teilt die Mittelebene des schalldurchlässigen Materials 3 die Gesamthöhe der beiden Kunststoffstrukturen unter Einbeziehung der Stege 4 bzw. Fäden 5 vorzugsweise im Verhältnis 2:1.

Das erfindungsgemäße Verfahren zur Herstellung der schalldurchlässigen Abdeckung in Form des einstückigen Körpers 1,2,3 sieht vor, daß das Vlies, Gewebe oder Gewirke 3 zwischen zwei Halbformen für die gitterartigen Kunststoffstrukturen 1,2 in eine Spritzgußmaschine eingelegt wird. Diese Halbformen können natürlich selbst aus jeweils einem oder mehreren Teilen bestehen. Die Positionierung bzw. Fixierung des Materials 3 während des Bewegungsablaufes, d.h. des Schließvorganges der Spritzgußmaschine wird durch Erzeugung eines Vakuums an einigen Punkten einer der Halbformen realisiert. Dazu sind auf einem Teilkreis zwischen den Heißkanalpunkten einer Spritzform Vakuumbohrungen vorgesehen. Anschließend wird Kunststoff von lediglich einer Seite aus in die geschlossene Form eingespritzt und durchdringt nach Ausfüllung der Halbform, in welcher die Einspritzung vorgenommen wird, schließlich auch das eingelegte schalldurchlässige Material 3 und füllt letztendlich auch die gegenüberliegende Halbform restlos aus. Sobald dies der Fall ist, wird die Zufuhr von weiterem Kunststoff gestoppt.

Eine besonders einfache Herstellung ist möglich, wenn das schalldurchlässige Material genau in der Ebene des Teilungsspaltes der beiden Halbformen eingelegt wird.

Um die oben angesprochenen erfindungsgemäßen Abdeckungen zu erzeugen, bei welchen die Gitterstege 1,2 auf beiden Seiten des Materials 3 unterschiedliche Dicke haben, ist vorgesehen, daß die beiden Halbformen unterschiedlich tief ausgenommen sind. In diesem Fall ist es von Vorteil, wenn gemäß einem zusätzlichen Erfindungsmerkmal der Kunststoff von der Seite der weniger tiefen Halbform her eingespritzt wird. Selbst wenn das schalldurchlässige Material 3 an einigen Stellen durch den Druck des eingespritzten Kunststoffes etwas von seiner idealen Lage weggedrückt werden sollte, befindet es sich noch immer innerhalb des Bereiches der Gitterstege und hiebei im besonderen des Gittersteges 1, ohne daß es bis an die Oberfläche der Kunststoffstruktur gelangt und so nicht mehr innerhalb des Kunststoffes eingebettet liegt.

Der Kunststoff kann bei der geschilderten erfindungsgemäßen Herstellungsart fast ungehindert durch das Material 3 hindurchdringen, und es kann dabei nicht passieren, daß von beiden Seiten einander entgegenströmendes Kunststoffmaterial aufeinandertrifft und durch den fortgesetzten Druck schließlich zur Seite, d.h. in Richtung zur Mitte der Gitteröffnungen hin gedrückt wird. Aus diesem Grund entstehen weder im Inneren des schalldurchlässigen Materials 3, d.h. zwischen dessen Fasern 6, noch an der Oberfläche Kunststoffstrukturen, welche von den Gitterstegen 1,2 in Richtung auf die Mitte der Gitteröffnungen hin gerichtet sind (sogenannte "Schwimmhäute"). Daher kann der Schall der Gitter im wesentlichen ungehindert passieren, wobei der Schalldruckpegelverlust maximal 2,5 dB beträgt.

## Patentansprüche

1. Schalldurchlässige Abdeckung, insbesondere für Lautsprecher, bestehend aus Gitteröffnungen, begrenzenden Stegen (1,2) aus gespritztem Kunststoffmaterial und aus einem die Gitteröffnungen abdeckenden, flächigen, schalldurchlässigen Material (3), beispielsweise einem Vlies, Gewebe oder Gewirke, wobei beiden Oberflächen des Materials benachbart deckungsgleiche Stege (1,2) angeordnet sind und das Material der Stege (1,2) das schalldurchlässige Material (3) durchdringt, dadurch gekennzeichnet, daß der Kunststoff einseitig angespritzt ist und eine der Kunststoffstrukturen aus Kunststoff besteht, welcher das schalldurchlässige Material (3) durchdrungen hat, sodaß die Kunststoffstrukturen im wesentlichen entlang der Gesamtheit aller Berührungsflächen der Gitterstege (1,2) miteinander und mit dem schalldurchlässigen Material (3) verbunden sind.

2. Abdeckung gemäß Anspruch 1, dadurch gekennzeichnet, daß die Höhe der Gitterstege (1,2) auf den beiden Seiten des schalldurchlässigen Materials (3) unterschiedlich ist, die dickeren Gitterstege (1) vorzugsweise auf der dem Lautsprecher abgewandten Seite des Materials (3) liegen und aus Kunststoff bestehen, der das schalldurchlässige Material (3) durchdrungen hat.

3. Abdeckung gemäß Anspruch 2, dadurch gekennzeichnet, daß die Mittelebene des schalldurchlässigen Materials (3) die Gesamthöhe der Gitterstege (1,2) beider Kunststoffstrukturen unter Einschluß der Fäden (5) oder Stege (4) im Verhältnis 2:1 teilt.

4. Abdeckung gemäß Anspruch 1, dadurch gekennzeichnet, daß der das schalldurchlässige Material (3) durchdringende Kunststoff zwischen den Gitterstegen (1,2) beider gitterartigen Strukturen im wesentlichen gerade verläuft, und mit dem schalldurchlässigen Material (3) verbundene Stege (4), allenfalls aus einzelnen Fäden (5) zusammengesetzt, bildet.

5. Verfahren zur Herstellung einer schalldurchlässigen Abdeckung gemäß einem der vorhergehenden Ansprüche, dadurch gekennzeichnet, daß das schalldurchlässige Material zwischen zwei Halbformen für die gitterartigen Kunststoffstrukturen in eine Spritzgußmaschine eingelegt, die Maschine geschlossen, anschließend Kunststoff von lediglich einer Seite des schalldurchlässigen Materials aus eingespritzt und zum Durchdringen des schalldurchlässigen Materials im wesentlichen entlang des gesamten Verlaufes der Stege gebracht wird, und die Zufuhr von weiterem Kunststoff gestoppt wird, wenn der Kunststoff das schalldurchlässige Material durchdrungen hat und auch die der Einspritzseite gegenüberliegende Form ausgefüllt hat.

6. Verfahren gemäß Anspruch 5, dadurch gekennzeichnet, daß das schalldurchlässige Material während des Schließvorganges der Spritzgußmaschine durch Erzeugung eines Vakuums an einigen Punkten einer der Halbformen fixiert wird.

7. Verfahren gemäß Anspruch 6, dadurch gekennzeichnet, daß bei unterschiedlich tiefen Halbformen der Kunststoff von der Seite der weniger tiefen Halbform her eingespritzt wird.

## Claims

1. A sound-permeable covering, more particularly for loudspeakers, consisting of lattice openings, webs (1,2) defining them and made of injected plastic material and a laminar, sound-permeable material (3), for instance a nonwoven, woven or knitted fabric, covering the lattice openings, wherein congruent webs (1,2) are arranged adjacently to the two surfaces of the material and the material of the webs (1, 2) penetrates the sound-permeable material (3), characterized in that the plastic is applied to one side by injection moulding and one of the plastic structures is made of plastic which has penetrated the sound-permeable material (3), with the result that the plastic structures are joined to one another essentially along the entirety of all the contact surfaces of the lattice webs (1,2) and to the sound-permeable material (3).

2. A covering according to claim 1, characterized in that the height of the lattice webs (1,2) on the two sides of the sound-permeable material (3) differs, the thicker lattice webs (1) are preferably situated on the side of the material (3) facing away from the loudspeaker and consist of plastic which has penetrated the sound-permeable material (3).

3. A covering according to claim 2, characterized in that the median plane of the sound-permeable material (3) divides the overall height of the lattice webs (1,2) of the two plastic structures including the threads (5) or webs (4) in the ratio of 2:1.

4. A covering according to claim 1, characterized in that the plastic penetrating the sound-permeable material (3) runs substantially straight between the lattice webs (1,2) of the two lattice-like structures, and forms webs (4), possibly composed of individual threads (5), which are joined to the sound-permeable material (3).

5. A method for producing a sound-permeable covering according to one of the preceding claims, characterized in that the sound-permeable material is placed in an injection moulding machine between two half-moulds for the lattice-like plastic structures, the machine is closed, plastic is then injected in from one side only of the sound-permeable material and is made to penetrate the sound-permeable material essentially along the whole run of the webs, and the supply of more plastic is stopped when the plastic has penetrated the sound-permeable material and has also filled up the mould situated opposite the injection side.

6. A method according to claim 5, characterized in that the sound-permeable material is fixed in position during the closing operation of the injection moulding machine by the creation of a vacuum at several points of one of the half-moulds.

7. A method according to claim 6, characterized in that with half-moulds of different depths, the plastic is injected in from the side of the less deep half-mould.

## Revendications

1. Couverture transmettant le son, en particulier pour haut-parleurs, constituée de cloisons (1, 2) en matière plastique moulée par injection, délimitant des ouvertures en grille et en un matériau transmettant le son, plat, recouvrant les ouvertures en grille par exemple un non-tissé, un tissu ou un tricot plat, des cloisons (1, 2) coïncidentes étant situées à proximité des deux surfaces du matériau et le matériau des cloisons (1, 2) traversant de part en part le matériau (3) transmettant le son, caractérisée en ce que la matière plastique est moulée par injection sur une face et l'une des structures de matière plastique est réalisée dans une matière plastique qui a traversé de part en part le matériau (3) transmettant le son, ce qui fait que les structures en matière plastique sont reliées entre elles le long de l'ensemble de toutes les surfaces de contact des cloisons (1, 2) de la grille et reliées avec le matériau (3) transmettant le son (3).

2. Couverture selon la revendication 1, caractérisée en ce que la hauteur des cloisons (1, 2) de la grille est différente sur les deux côtés du matériau (3) transmettant le son, les cloisons (1) plus épaisses se situant de préférence sur le côté du matériau (3), tourné à l'opposé du haut-parleur et étant réalisées en matière plastique qui a traversé de part en part le matériau (3) transmettant le son.

3. Couverture selon la revendication 2, caractérisée en ce que le plan médian du matériau (3) transmettant le son partage la hauteur totale des cloisons (1, 2) de la grille des deux structures en matière plastique, fils (5) ou cloisons (4) compris, dans un rapport de 2 à 1.

4. Couverture selon la revendication 1, caractérisée en ce que la matière plastique traversant de part en part le matériau (3) transmettant le son, s'étend sensiblement en ligne droite entre les cloisons (1, 2) des deux structures en grille et forme avec le matériau (3) transmettant le son des cloisons (4) reliées, en tout cas composées de fils (5) individuels.

5. Procédé de fabrication d'une couverture transmettant le son selon l'une des revendications précédentes, caractérisé en ce que le matériau transmettant le son est placé dans une machine de moulage par injection, entre deux demi-moules pour les structures en matière plastique en grille, la machine est fermée, puis de la matière plastique est injectée à partir d'un seul côté du matériau transmettant le son et pour la traversée de part en part du matériau transmettant le son, est amenée sensiblement le long de tout le parcours des cloisons, et l'arrivée de matière plastique supplémentaire est stoppée lorsque la matière plastique a traversé de part en part le matériau transmettant le son et lorsque le moule situé face au côté d'injection est également rempli.

6. Procédé selon la revendication 5, caractérisé en ce que le matériau transmettant le son est fixé pendant l'opération de fermeture de la machine de moulage par injection, par production d'un vide, en quelques points de l'un des demi-moules.

7. Procédé selon la revendication 6, caractérisé en ce que dans le cas de demi-moules de profondeur différente, la matière plastique est injectée à partir du côté du demi-moule le moins profond.
